# EUROPEAN PATENT APPLICATION

(11) **EP 0 679 040 A2**
(43) Date of publication of application: **25.10.1995**
(21) Application number: 95850077.9
(22) Date of filing: 18.04.1995
(51) Int. Cl.: H04Q 7/20

(54) **Remote programming of a radio telephone system**

(30) Priority: 18.04.1994 US 229871
(71) Applicant: Hughes Aircraft Company, Los Angeles, California 90080-0028 (US)
(72) Inventor: Kluesing, Alvin Dale, Duluth, GA 30136 (US); Kwok, Sai, San Diego, CA 92129 (US)
(74) Representative: Stolt, Lars C.

(57) **Abstract**

A cellular telephone system (20) operable in conjunction with a cellular mobile telephone switching office (30) includes a subscriber unit (22) and a call routing system (34). The subscriber unit (22) includes a cellular transceiver (60), antenna (62), power plug (64), and handset (68), and, optionally, a battery pack. The subscriber unit (22), in one embodiment, has a plurality of dedicated calling buttons (24, 26, 28) that may be externally programmed and that, when operated, initiate cellular communication to one of three respective programmed telephone numbers. The telephone numbers corresponding to each of the dedicated calling buttons is programmable over the air using a remote-control programming method. A mobile identification number and a system identification number of the subscriber unit are also programmable over the air using the remote-control programming method so as to remotely activate the cellular telephone system.

## Description

### FIELD OF THE INVENTION

This invention relates to radio telephone systems, and, more particularly, to remote-controlled programming of such radio telephone systems.

### BACKGROUND OF THE INVENTION

Since their introduction in the early 1980's, cellular telephone systems have become an important part of the communications network. A cellular telephone communicates by radio waves with a mobile telephone switching office (MTSO), which links the cellular telephone to the conventional land line telephone system. The value of a cellular telephone system depends upon the breadth of coverage of the cells and mobile telephone switching offices. At the present time nearly all metropolitan and many rural areas have cellular coverage.

Cellular telephones have found their greatest use as mobile-vehicle and hand-carried units. The mobile units typically are installed in automobiles and operate from the automotive battery power, or are hand-held units and operate from battery packs. Cellular telephone systems have also found use in roadside emergency call-boxes in areas with cellular coverage, because such roadside call-boxes are stand-alone units that do not require hard wiring and roadside trenches to bury that wiring. They are consequently less expensive than hard-wired call-boxes.

Cellular telephone systems have the potential to be of great value in emergency and safety situations, where immediate communication can save lives and property. Automobile drivers who witness an accident and wish to summon aid, but otherwise would never want a cellular system because they do not need to make cellular personal calls, are an example of a group that would benefit greatly from the availability of a cellular mobile unit for safety and/or emergency needs. Cellular telephone systems have not, however, found as wide a usage as might be expected in such applications, due to the cost structure for owning or leasing cellular mobile units.

To own a cellular mobile unit, the user typically pays an initial cost for the mobile unit, a monthly charge for access to the cellular system, and a time charge for each call placed or received. The fixed initial and monthly charge make cellular telephone mobile units too expensive for many persons to have and maintain, even though they might benefit from access to the cellular system for safety and emergency reasons.

Several approaches have been considered in an attempt to introduce cellular mobile units whose use is limited to safety and emergency requirements. However, the economics of the cost of the mobile unit and the monthly access charge have prevented these approaches from being successful, inasmuch as the cellular telephone companies must make a profit on the cellular service, even if it is supplied only for safety and emergency requirements.

There is therefore a need for an approach for providing cellular service primarily to meet emergency and safety requirements, in a manner that is more affordable for persons who would not otherwise need or use a substantial amount of cellular service.

In spite of the fact that the initial and monthly charges make cellular telephone mobile units too expensive for many persons to have and maintain, usage of cellular telephones has experienced tremendous growth. As a result, the logistics of selling and maintaining cellular telephone equipment have become more involved. Whereas cellular telephones were once largely distributed and maintained by the providers of cellular telephone service, they are now sold largely through mass-market retailers. Problematically, such retailers typically lack the expertise and experience necessary to activate and/or program the cellular telephones--a task once done by cellular telephone service providers at the time of sale. Thus, what is needed is a remote-controlled system for activating and programming cellular telephones.

The present invention fulfills the above and other needs, and further provides related advantages.

### SUMMARY OF THE INVENTION

The present invention provides a cellular telephone system that is affordable for those who would not otherwise have a cellular mobile unit. The present invention provides a modified cellular technology that can be provided on a less expensive basis than conventional cellular systems, both as to the capital cost of the mobile unit and the continuing monthly and use charges. The present approach is fuIIy compatible with existing cellular systems but in one form uses modified mobile units and modified call routing.

In accordance with the invention, a cellular telephone system is operable in conjunction with a cellular mobile telephone switching office. The telephone system includes a subscriber unit that comprises a cellular transceiver capable of communication with a mobile telephone switching office through a voice channel, a microphone and a speaker connected to the transceiver to permit voice communication through the transceiver, and an antenna through which the transceiver transmits signals to, and receives signals from, the mobile telephone switching office. The subscriber unit also includes means for initiating outgoing cellular communication through the cellular transceiver when operated, and means for providing security/recognition information from the subscriber unit through the voice channel. The means for initiating is, in one embodiment, a plurality of dedicated calling buttons, typically three in number, that establish contact to preselected telephone numbers through the call routing system, when operated. The cellular telephone system further includes a call routing system in contact with the subscriber unit through the mobile telephone switching office. The call routing system comprises a memory that stores a plurality of telephone numbers associated with the security/recognition information of each subscriber unit, means for providing a menu of the stored telephone numbers to the subscriber unit through the mobile telephone switching office, and means for initiating a telephone connection from the subscriber unit to a call recipient upon receipt of a signal from the subscriber unit indicating a selection of a telephone number from the menu.

The cellular telephone system uses a unique subscriber unit of reduced capability as compared with conventional subscriber units, in order to save unit hardware costs. The subscriber unit has no general dial keypad, display, or ringer, and therefore can make outgoing calls only to a limited group of destination numbers and cannot practically receive incoming calls. In the preferred cellular phone approach, the subscriber unit has a dedicated calling button for a general emergency number, such as the 911 number in operation throughout most of the United States. A dedicated roadside vehicle service calling button reaches roadside vehicle service organizations that are needed for car repairs which do not constitute emergencies in the 911 sense.

Access to only emergency and roadside vehicle service is not sufficient, however, to make such a system sufficiently economically attractive to cellular service suppliers to produce an interest. The present system therefore adds a menu-driven limited personal-use capability that can be supplied for those who rarely would make personal calls on their subscriber units. In a preprogramming procedure, the user designates a small group, or listing, of numbers (e.g., home, work, doctor, etc.) that would likely be called if the user were ever to make a cellular call, and these numbers are stored in a calling profile in the call routing system for each user and subscriber unit. After the user gains access to the system with security/recognition codes, the user can automatically call one of the numbers in the calling profile using a menu-driven approach. One of the numbers of the calling profile can be "0" to reach a human operator, but such calling requiring human intervention can be made considerably more expensive than calling the numbers on the listing of the calling profile.

In addition to the above-described preprogramming procedure, an over-the-air remote-controlled programming procedure may be utilized. For example, the human operator can be contacted by the user selecting "0" from the menu of stored telephone numbers, as described above. The user next directs the operator to connect the subscriber unit to a cellular programming center (CPC). Alternatively, the user may select the cellular programming center from the menu of stored telephone numbers. In either case, upon being put into contact with the cellular programming center, a cellular programming center operator, or a cellular programming center voice menu, requests that the user specify the dedicated calling button to reprogram. Once the user specifies the dedicated calling button, the user is asked for the new telephone number to which the specified dedicated calling button should be reprogrammed. The user is then asked to initiate a programming sequence by pressing a prescribed calling button, or combination of calling buttons. An indicator light can be used to indicate to the user that the subscriber unit has been requested to initiate a programming mode in response to the pressing of the dedicated calling button(s). The subscriber unit then transmits a mobile identification number (MIN) to the cellular programming center, and in response thereto, the cellular programming center sends a program signal to the subscriber unit. The program signal instructs the subscriber unit to place itself into the programming mode. Finally, the cellular programming center sends the new telephone number to the subscriber unit and in response thereto, the subscriber unit is programmed with the new telephone number.

A key feature of the invention is the ability to transmit security/recognition information from the subscriber unit through the mobile telephone switching office and to a virtual network. In a preferred approach, the roadside vehicle services number and the personal-use calling number are wide area toll-free numbers, which in the United States and Canada are 800 numbers. Normally, when such toll-free numbers are used, it is not necessary that security/recognition information be transmitted to the provider of the toll-free number, as the caller is not charged for the call.

However, with the present approach, the toll-free number sets up a virtual network wherein the caller uses the toll-free number to contact a selection of roadside vehicle services firms or one of an available group of personal calling recipients. It is therefore necessary to bill the user of the subscriber unit for the call, and that billing varies with the user's selection of services. To permit such billing without the use of human intervention (as by an operator taking information), the present invention provides that the security/recognition is transmitted to the provider of the toll-free number, preferably using the same communications frequency band as that used for the voice message. Thus, the security/recognition information can be transmitted as DTMF tones from the subscriber unit, through the transceiver to the mobile telephone switching office, and thence to the toll-free provider reached by pressing the roadside vehicle services button or the personal calling button. The security/recognition information, typically in the form of the mobile identification number (MIN) indicative of the subscriber unit and a system identification number (SID) indicative of the primary provider of cellular services for that subscriber unit, are transmitted automatically, without human intervention, only after the subscriber unit receives a "ready to send" message from the toll-free provider, by way of the mobile telephone switching office. In the presently preferred form of the invention, the ready to send message is the DTMF tones (4,5) in sequence. After security/recognition information is transmitted, the toll-free provider sends an "acknowledged" signal (the DTMF tones (7,8) in sequence in the preferred approach) or "not acknowledged" signal (the DTMF tones (4,7) in the preferred approach). The security/recognition information and related information are desirably transmitted in hexadecimal form to reduce the likelihood that a user could falsify that information.

Thus, in accordance with the invention, a cellular telephone system operable in conjunction with a cellular mobile telephone switching office includes a subscriber unit comprising a cellular transceiver capable of remote operation within a frequency band in conjunction with a mobile telephone switching office, and an antenna through which the transceiver transmits to, and receives signals from, the mobile telephone switching office. In one embodiment, there are three dedicated calling buttons, including an emergency services calling button, a roadside vehicle services calling button, and a personal-use calling button, each of the three buttons initiating outgoing cellular communication when operated. A memory means receives and stores three numbers for calling by the three calling buttons, an emergency calling button number corresponding to an emergency service, a roadside vehicle services calling button number corresponding to roadside vehicle service, and a personal-use calling button number corresponding to a personal-use service, and also receives and stores the security/recognition information. There is a means for providing the calling numbers to the transceiver to initiate outgoing cellular communication when the respective calling buttons are operated. Identification is provided by a means for recognizing a ready-to-send signal received through the antenna from the provider of toll-free services, means for transmitting the stored security/recognition information from the memory means to the transceiver and thence to the mobile telephone switching office in the same frequency band as is used for voice communication through the transceiver, after the means for recognizing has recognized a ready-to-send signal, and means for recognizing an acknowledge signal received through the antenna after the means for sending has sent the security/recognition information from the transceiver to the mobile telephone switching office. A handset having a microphone and speaker is connected to the cellular transceiver.

In a second embodiment, the present invention may include the cellular telephone of the first embodiment, i.e., having dedicated calling buttons, however, the second embodiment may alternatively be utilized with a conventional full keypad cellular telephone. The above-mentioned security/recognition information is not generally programmed into cellular telephones until after the subscriber/user purchases the cellular telephone. Because such phones are generally marketed by mass retailers who lack the expertise necessary to activate the phones, the subscriber heretofore had to take the cellular telephone to a provider of cellular telephone service to be programmed with the security/recognition information, i.e., to be activated.

In the second embodiment, such activation is accomplished over the air in the same way as the telephone numbers associated with the dedicated calling buttons are programmed. In practice, the user initiates an outgoing call using the subscriber unit. The call is initiated to the cellular programming center (CPC). The telephone number of the cellular programming center is unrestricted by the cellular telephone service providers, and therefore can be accessed without the subscriber unit being activated. Upon connecting with the cellular programming center, the user selects a cellular telephone service provider. (Usually, two cellular telephone service providers provide service in a particular service area.) Alternatively, the user can initiate the outgoing call directly to the cellular telephone service provider with whom the user wishes to do business. In either, case, once the cellular telephone service provider is selected (either by specifying to the cellular programming center, e.g., by pressing one of the dedicated calling buttons or a key on the full kepyad, or by directly dialing the selected cellular telephone service provider) the mobile identification number and the system identification number (and possibly a first primary paging channel, a first secondary paging channel and an access overload class) are programmed into the memory of the subscriber unit thereby activating the subscriber unit. In this way, the subscriber unit is remotely activated without the need for the expertise and experience of the cellular telephone service provider, and without the need for the user to transport the subscriber to the cellular telephone service provider's place of business.

The present invention therefore provides an advance in the engineering of cellular communications systems that are practical to provide a cellular capability to those who need it only for safety and emergency reasons, but who might occasionally call other numbers over their cellular subscriber unit. In addition, the present invention provides a cellular capability that is remotely activateable. Other features of the invention will be apparent from the following more detailed description of the preferred embodiments, taken in conjunction with the accompanying drawings, which illustrate, by way of example, the principles of the invention.

### BRIEF DESCRIPTION OF THE DRAWINGS

Figure 1 is a block diagram of the network design of the cellular telephone system.
Figure 2 is a block diagram of the subscriber unit of the cellular telephone system;
Figure 3 is a flow chart for the operation of the call routing system for personal-use calls;
Figure 4 is a flow chart for the transmission of security/recognition information from the subscriber unit to the toll-free provider; and
Figures 5A, 5B and 5C are a flow chart for over-the-air remote-controlled programming of telephone numbers associated with dedicated calling buttons on the subscriber unit, and stored telephone numbers that are stored in a caller profile for each user.

### DETAILED DESCRIPTION OF THE INVENTION

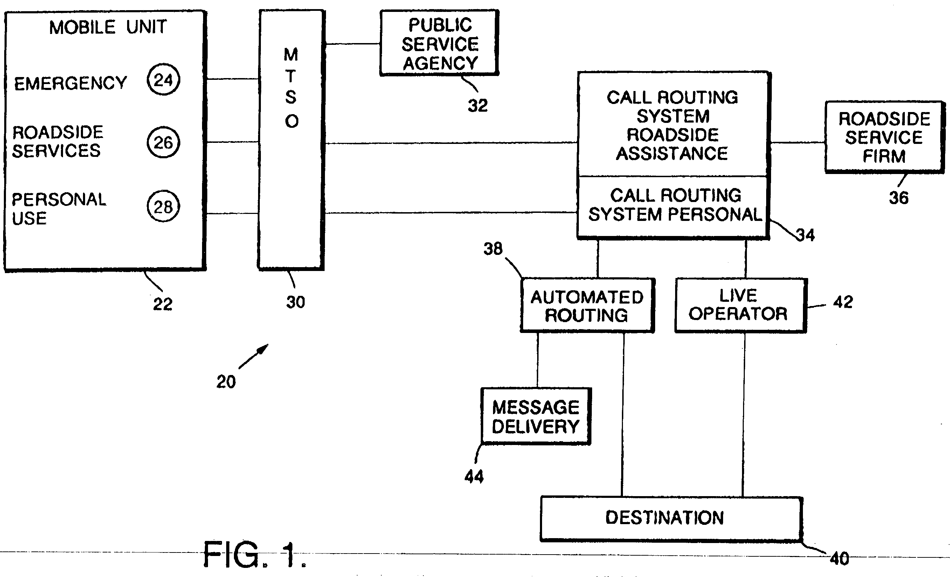

Referring to Figure 1, a network architecture is shown of a cellular telephone system 20. A subscriber unit 22 is hard-wired into a vehicle, or is portable (with the requirement for a power source). The subscriber unit 22, which will be discussed in more detail subsequently, has only three calling buttons. There is no general keypad for calling other numbers, nor is there a ringer for announcing incoming calls. In this embodiment, the three calling buttons include an emergency calling button 24, a roadside vehicle services calling button 26, and a personal-use calling button 28. (Alternatively, the buttons may be programmed for any numbers selected by the user, such as general calling numbers.) Each of these buttons, when depressed, initiates a cellular telephone call to a conventional mobile telephone switching office (MTSO) 30.

The mobile telephone switching office recognizes the nature of the call by the number of digits in the called number or by control channel signalling, and the response of the mobile telephone switching office 30 depends upon the nature of the incoming call. For a call initiated by the emergency button 24, the mobile telephone switching office routes the call directly to the number of a local emergency public service agency 32, which is "911" in most areas of the United States. In systems that support the present approach, the location of the caller is known generally by the cell site that receives the call from the subscriber unit, and the mobile telephone switching office connects the emergency call with the agency 32 that is responsible for handling calls from that area.

For a call initiated by either the roadside vehicle services button 26 or the personal-use button 28, the mobile telephone switching office 30 connects the call through conventional telephone land lines to a call routing system 34. The call routing system 34 may be a stand-alone system completely separate from a national long-distance carrier, or may be integrated with a national long-distance carrier that has been configured as described herein to handle calls of the telephone system 20. The call routing system 34 recognizes such calls by special codes transmitted with the signal transmitted from the subscriber unit 22 and thence from the mobile telephone switching office 30, which will be discussed in greater detail subsequently.

In the preferred form, the call routing system 34 makes use of toll-free numbers provided by a "toll-free provider", and the invention will be described in relation to the preferred embodiment. However, the invention is not limited to the use of toll-free numbers. In the United States, the toll-free numbers are familiar as "800" numbers. If the call is initiated by the roadside vehicle services button 26, the call routing system 34 normally routes the call to one of several national or regional toll-free (800) numbers of roadside service organizations or firms 36. If desired, the user of the subscriber unit may be provided a listing of such firms 36, from which the user may select the one to receive the call. A menu-based system to accomplish such selections is described subsequently in relation to the personal-use calling button, and the same principles apply for roadside vehicle services. The selected firm 36 then receives the call and sees to the provision of roadside vehicle services to the user. In some areas, local fast-response teams have been established to remove disabled vehicles from the highways to avoid the disruption of traffic during busy periods. The call routing system 34 or the mobile telephone switching office 30 can route calls within the jurisdiction of such teams directly to the teams for immediate action.

The system 20 is primarily designed for emergency and safety use, but has the capability for making personal-use calls. However, the fee structuring may be designed to curtail the number of personal-use calls by making them relatively expensive, as compared to their cost on a conventional cellular system. In the present approach, personal-use calls can be of two types, those to numbers stored in a calling profile defined for each particular user, which are automatically routed by the call routing system 34 without live operator assistance, and those not on the calling profile, which require live operator assistance. The fees are structured so that the automatically routed calls are somewhat more expensive than calls made with a conventional cellular telephone system, while the calls that require live operator assistance are substantially more expensive than calls made with a conventional cellular telephone system.

The call routing system 34 therefore first determines whether the call originated by the personal-use button 28 can be handled automatically, without live operator assistance. If so, the call is routed automatically, numeral 38, via conventional land lines to its destination 40. If live operator assistance is required, the call is routed through a human operator 42, who routes the call to the destination 40. The routing procedures also have the capability for delivering a message, numeral 44, if there is no answer at the called destination 40. The operation of the call routing system 34 in respect to automatic and live operator-assisted calling will be discussed in more detail below.

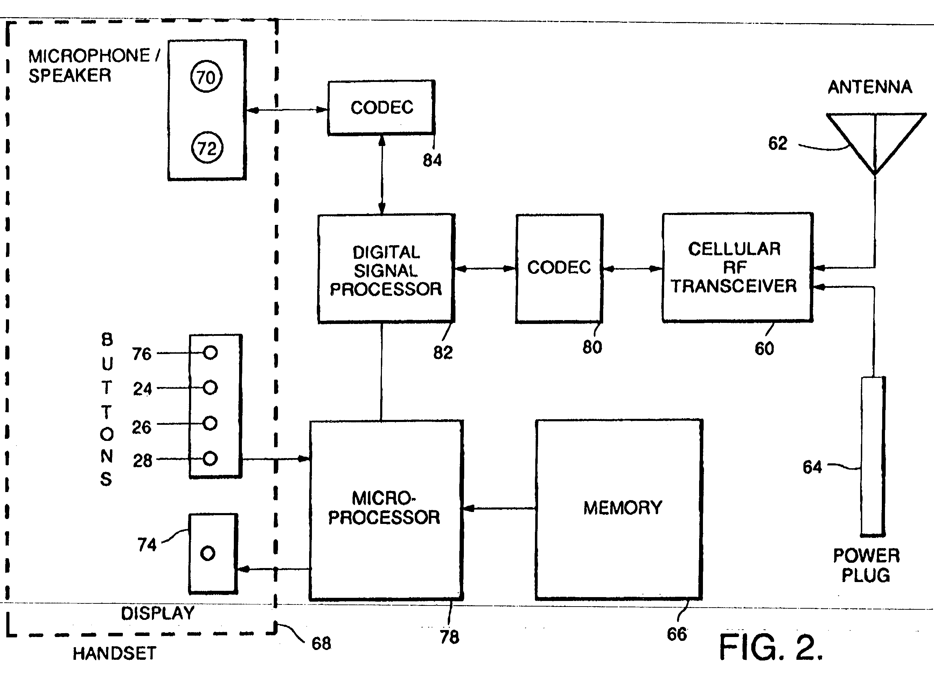

Figure 2 depicts the subscriber unit 22 in greater detail. The subscriber unit 22 includes a cellular radio frequency (rf) transceiver 60 that handles signal and voice transmission with the mobile telephone switching office 30, through a built-in antenna 62. Such transceivers 60 are well known in the art and widely available commercially. The antenna 62 is preferably a 1/2 wave antenna.

A power plug 64 provides power to the transceiver 60 from an external power source, and provides power for the transceiver and other components of the subscriber unit 22. If the power source is an automobile battery, the plug 64 desirably plugs directly into the cigarette lighter. If the power source is a battery pack (not shown), the plug 64 is adapted for plugging directly into the battery pack. Preferably, the battery pack is provided with a plug like that of a cigarette lighter in an automobile, so that the plug 64 can be a cigarette lighter plug that can be used with the automobile or a battery pack.

In the preferred approach, internal voice and data processing within the subscriber unit 22 are performed digitally. Information flowing to and from the transceiver 60 passes through a coder/decoder, or CODEC 80, which is a bidirectional analog/digital and digital/analog converter. The transceiver 60 is on the analog side, and a digital signal processor 82 is on the digital side of the CODEC 80. The digital signal processor 82 is conventional in cellular telephone subscriber units that are internally digital. Such a digital signal processor 82 performs control and housekeeping functions such as processing voice signals for clarity, if needed, automatically adjusting volume, and detecting errors.

Voice transmissions are received from a microphone 70 and sent to a speaker 72 through another CODEC 84, so that the microphone 70 and speaker 72 operate in analog form.

Control, indicator, and security/recognition functions are performed by a microprocessor 78. When one of the call buttons 24, 26, or 28 is pressed, information required to make a call is located in a memory 66 and loaded into the microprocessor 78 from the memory 66. In addition, the memory 66 contains information necessary to activate the subscriber unit (or mobile unit). Specifically, the memory 66 contains a mobile identification number (MIN), a system identification number (SID), a first primary paging channel, a first secondary paging channel, and an access overload class, as are known in the art. In addition, the memory may contain a negative SID list and other subscriber-unit-specific configuration settings. The memory 66 is desirably an erasable programmable read-only memory (EPROM) that is programmed by a dealer, and cannot be reprogrammed by the user using only the subscriber unit.

There is also, optionally, an end call/power off button 76, which could also be a hookswitch, that terminates a call. Alternatively, a call can be ended simply by unplugging the power plug 64 from the external power source.

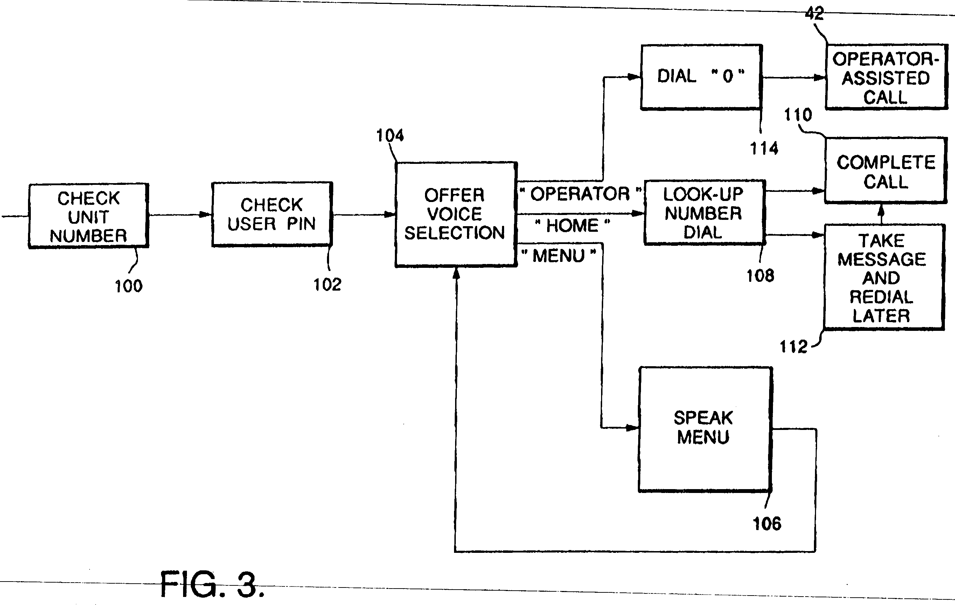

The information retrieved from the memory 66 when one of the buttons 24, 26, 28 is pressed includes the number to be called, security/recognition information if required for that number, and signals to establish cellular contact to the mobile telephone switching office 30 (to be discussed in more detail in relation to Figure 3). Preferably, the number to be called is that of an emergency service agency (typically "911" in the United States) for the emergency call button 24, and a different stored toll-free number (typically an "800" number for the United States) for each of the buttons 26 or 28.

The microprocessor 78 also provides a status signal to an indicator display 74 that is provided on the handset 68. The display 74 can be a single light to indicate a call in progress, or can be more complex.

In a preferred form, the subscriber unit 22 is less than 8 inches by 5 inches by 1-3/4 inches high, and weighs less than 2-1/2 pounds. The light weight, small size, and low cost are achieved by omitting certain features that are typically present in conventional cellular telephones. There is no full-feature keypad (10 or 12 key), only the three buttons 24, 26 and 28. There is no ringer that would alert the user to incoming calls, as incoming calls are not contemplated in the telephone system. Although the transceiver handles incoming information in the form of words spoken by the recipient of a call from the subscriber unit, and handshake and confirmation signals from the mobile telephone switching office, it is not expected that there would be incoming calls to the subscriber unit.

When the emergency button 24 is pushed, the microprocessor 78 activates the transceiver 60 to establish cellular contact with the mobile telephone switching office 30. When contact is established, the microprocessor 78 transmits a number that is recognized by the mobile telephone switching office as a request for contact with a particular destination within the network, such as the public service agency 32. That destination number is "911" in most of the United States, but in other areas an appropriate number is programmed into the system. The mobile telephone switching office establishes a telephone link to the public service agency 32, and the user of the subscriber unit 22 is placed in voice contact with the agency 32. No security/recognition information is required or transmitted.

Figure 3 depicts the operation of the call routing system 34 in handling roadside vehicle services calls initiated by the roadside vehicle services button 26, and personal-use calls initiated by the personal-use button 28 of the subscriber unit 22. This call routing system 34 may utilize features added to existing telephone network systems, and operate in conjunction with the features already available on such telephone networks. Equivalently, some functions may be provided in a custom manner. For example, the operator or message delivery systems may be part of the land-line communications network, or may be provided specifically for the system.

Since the calls initiated by the personal-use button 28 are typically charged to the user, the responsibility of the user must first be established. The call routing system 34 checks the security information transmitted from the subscriber unit both as to the subscriber unit number (i.e., the mobile identification number (MIN)), numeral 100, and as to a personal identification number (PIN), numeral 102, if provided. Like those used for banking, the personal identification number is known only to the person who can properly authorize billing to an account. The system may be implemented without personal identification numbers, with security against unallowed calls being provided by a lockout feature on the subscriber unit.

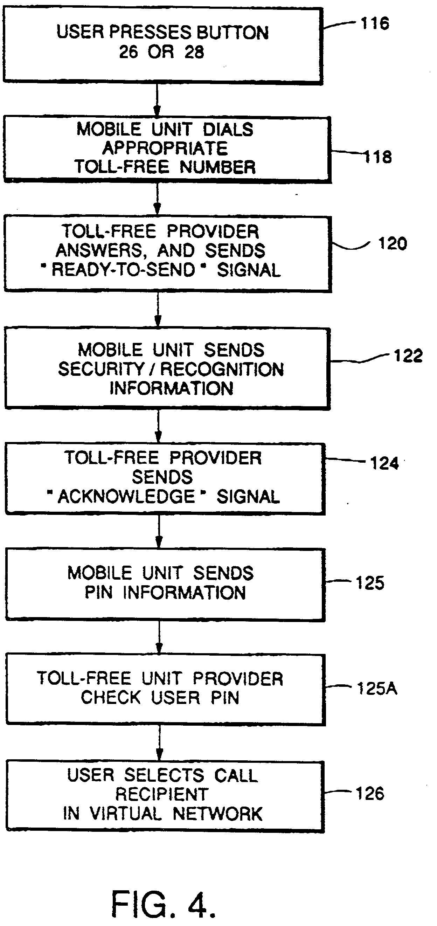

Figure 4 illustrates the process for transmitting security/recognition information. When the button 26 or 28 is depressed, the microprocessor 78 activates the transceiver to establish cellular contact with the mobile telephone switching office 30, and dials the toll-free (800) number corresponding to that button 26 or 28, and retrieved from the memory 66. When the toll-free provider answers, it transmits a "ready-to-send" signal to the subscriber unit 22, indicating that the subscriber unit should transmit appropriate security/recognition information. The ready-to-send signal is transmitted in hexadecimal DTMF tones in the same frequency band as the voice transmissions. The ready-to-send signal is not transmitted on a wide-band or side-band or other data transmission frequency, as is normally the case for non-verbal information transmitted between the subscriber unit 22 and the mobile telephone switching office 30. The use of data transmission frequencies to transmit information into the call routing system 34 would require significant system modifications and additional costs, and these are avoided by using DTMF signals. The present inventors have selected the DTMF tone set (4,5) as their preferred ready-to-send signal.

When the ready-to-send signal is received and recognized by the microprocessor 78, the microprocessor 78 retrieves the security-recognition information from memory and transmits it to the call routing system 34 and thence to the toll-free number called. The security/recognition information desirably includes a number that identifies the particular subscriber unit 22, such as, for example, the mobile identification number (MIN). In the United States, the mobile identification number is normally a 10-digit number with the first three digits an area code and the remaining digits a conventional 7-digit number comparable to a local telephone number. The security/recognition information also includes a number that identifies the user's basic provider of cellular service, such as, for example, the system identification number, or (SID). In the United States, the station identification number is normally a 5-digit number that identifies the location and provider of the user's basic cellular service, mobile identification number and station identification number information is transmitted to the call routing system 34 for roadside service and personal use calls, for two reasons. First, they identify permitted users of the system, and exclude those not permitted to use the system. Second, in each case these connections establish virtual calling networks that permit the user to contact a number of called parties. Either the call routing system may bill the user for use charges, the called party may bill the user for services, or both may bill the user. Transmitting the mobile identification number and station identification number permit such billing to be accomplished in an automated fashion, without human intervention.

Preferably, the mobile identification number and station identification number are transmitted to the mobile telephone switching office 30 in hexadecimal DTMF tones, preceded and followed by identification information, within the voice frequency band used by the transceiver 60 to communicate with the mobile telephone switching office 30. A security/recognition data set, including a leading identifier, the mobile identification number, the station identification number, a check sum, and a trailing identifier, are transmitted. This data set is hexadecimal format, rather than binary or decimal format, to use leading and trailing identifiers that are not available on a conventional full-featured keypad. A telephone has transmission/receipt capability not available to the user, including four signals in addition to the twelve buttons on the keypad. The present approach preferably utilizes as a leading identifier one of those unavailable signals and as a trailing identifier another of those unavailable signals. The purpose is to inhibit unauthorized access from a full-keypad unit. The information is transmitted in DTMF tones in the frequency range of the audio transmissions rather than in a data transmission frequency, for the reasons indicated previously.

After the security/recognition data set is received, analyzed, and found to be acceptable for recognition and billing purposes by the equipment at the toll-free number called, a DTMF "acknowledgment" signal is sent to the subscriber unit 22. The inventors have selected the DTMF tone set (7,8) as their acknowledgment signal. If, on the other hand, there is a transmission error, a "negative acknowledge" signal is transmitted to the subscriber unit 22. The inventors have selected the DTMF tone set (4,7) as their negative acknowledgment signal.

After the security/recognition information is transmitted and recognized, the personal identification number information, if used, is transmitted and recognized, personal identification number information differs from security/recognition, because the former is stored only in the mind of the user and the latter is stored in the subscriber unit 22. The system 20 can be used without a personal identification number, relying on physical security to prevent unauthorized system use.

If the security and recognition checks 100 and 102 are passed, the user is requested by a voice synthesizer, numeral 104, to select a number to be called from the user's prerecorded calling profile, which is associated with the particular user through the user's mobile identification number. In the presently preferred embodiment of the invention, the user is permitted to identify a limited number, typically about 2-8, of destinations that are likely to be called. Such calls might be to "home", "office", "doctor", etc. When the user purchases the subscriber unit or later contacts the call routing system 34 through another telephone, the user is permitted to create the calling profile. The calling profile associates each of the limited number of calls with a telephone number corresponding to that destination and provided by the user as the calling profile is created.

Access to the destinations identified in the calling profile during the course of a call from the subscriber unit 22, with activation using the personal-call button 28, is by a similar approach to that described. The user is permitted to select items from a "menu" transmitted from the call routing system using synthesized speech, numeral 106. The user is allowed to make a selection by keying one of the calling buttons at the appropriate point in the menu.

When the user makes a selection, the call routing system 34 looks up the telephone number of that destination from the calling profile, numeral 108, and dials that number. If there is an answer, the call is completed, numeral 110. If there is no answer, in one embodiment the user is permitted to record a message on the call routing system for the destination, numeral 112. The call routing system 34 then re-dials the number of the selected destination at a later time, and delivers the message if there is an answer. If there is no answer, the re-dialling can be repeated as necessary. This message feature is provided only for destinations reached through an automatic dialling, in the present approach.

One of the alternatives of the calling profile is "operator" or "0", so that the user can, if necessary, contact a human operator 42. This operator may be provided by the cellular service provider, or by the operator of the virtual network. After the user keys the entry for "operator", the telephone number "0" is dialled, numeral 114, to connect the user to the live operator 42. The human operator can then route the call to any number reachable through the telephone system. However, the cost of an operator-assisted call is established to be high, inasmuch as the present system is intended to be primarily for emergencies and safety-related calls, not a substitute for conventional cellular calling.

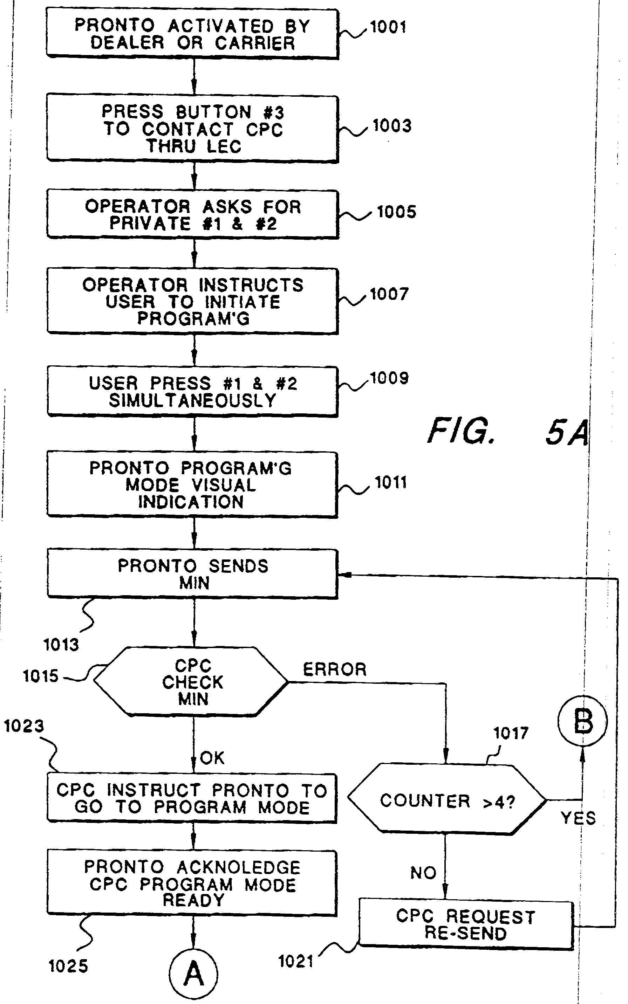

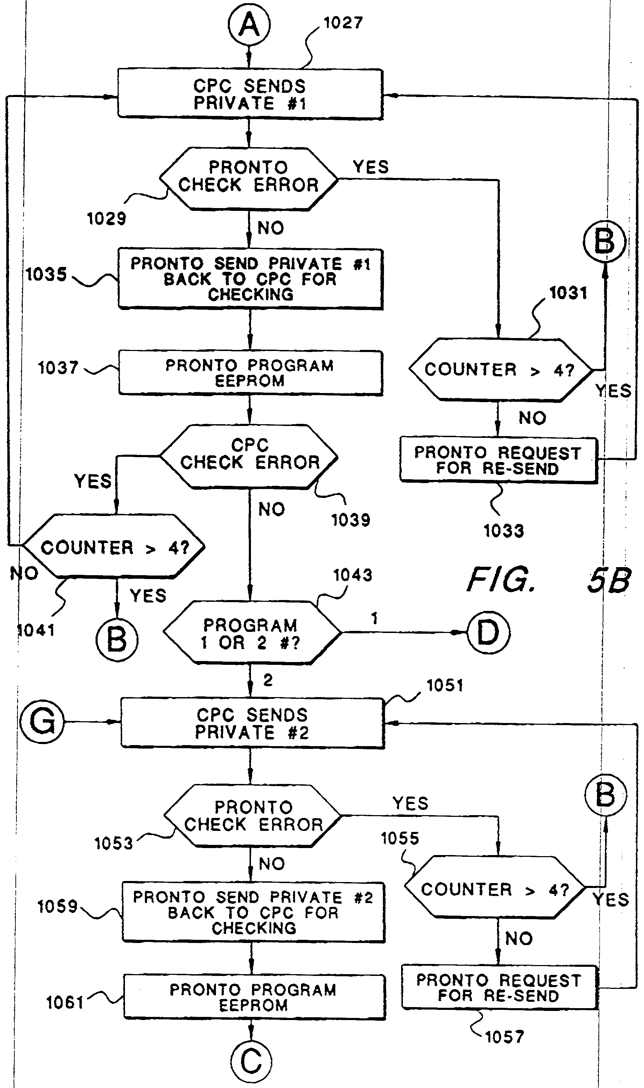

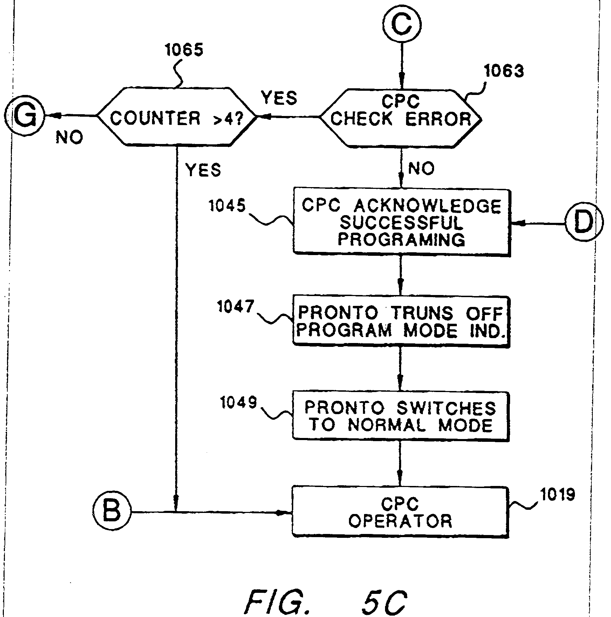

Referring to Figures 5A, 5B and 5C, a flow chart is shown for over-the-air remote-controlled programming of a cellular telephone (i.e., subscriber unit or mobile unit). Such remote-controlled programming may preferably be of telephone numbers associated with dedicated calling buttons on the subscriber unit or may be of other parameters within the subscriber unit. With reference to Figure 5A, once the emergency telephone system has been activated by a dealer or carrier (Block 1001), discussed below, the user of the subscriber unit can contact a cellular programming center (CPC), which may be either the cellular telephone carrier, or a third party, by selecting, e.g., the personal use button described above, and by further selecting the cellular programming center, through the voice menu, or through the human operator (Block 1003). In Fig. 1 the cellular programming center is a part of the call routing system 34. When the user keys the entry for operator and is connected to a human operator as discussed above for operator-assisted call routing, the user can then tell the operator that he wishes instead to reprogram the subscriber unit. This transaction may be handled by the same or a different live operator at the call routing system or cellular programming center. Once in contact with the cellular programming center, a cellular programming center operator asks the user which of the dedicated calling buttons the user wishes to program (or reprogram). The operator also asks for the telephone number with which the user wishes to program the dedicated calling button (Block 1005).

Next, the operator instructs the user to initiate programming of the subscriber unit (Block 1007). In order to initiate programming, the user can, e.g., press simultaneously two of the dedicated calling buttons (Block 1009). In response to the pressing of the buttons, the subscriber unit provides a visual indication that it has initiated the programming mode, e.g., by flashing or lighting an LED (Block 1011).

Next, the subscriber unit transmits a mobile identification number (MIN) to the cellular programming center, using, e.g., DTMF codes (Block 1013). The cellular programming center checks the mobile identification number (Block 1015), and if there is an error, a counter is incremented and checked. If the counter exceeds, e.g., four (Block 1017), then the cellular programming center requests a resend of the mobile identification number using, e.g., DTMF codes (Block 1021). In response to the resend request, the subscriber unit resends the mobile identification number (Block 1013) and the cellular programming center again checks the mobile identification number (Block 1015). In the event that after four attempts the subscriber unit has not successfully sent, or the cellular programming center has not successfully received, the mobile identification number, then the cellular programming center operator will provide further instructions to the user of the subscriber unit (Block 1019).

If within four tries, the cellular programming center successfully receives the mobile identification number, then the cellular programming center will instruct the subscriber unit to go into program mode, e.g., by transmitting a program-mode signal consisting of, e.g., one or more DTMF codes to the subscriber unit (Block 1023). The subscriber unit next acknowledges to the cellular programming center that it is in program mode and ready to be programmed (Block 1025) by transmitting an acknowledge signal consisting of, e.g., one or more DTMF codes and, referring to Figure 5B, the cellular programming center sends the first number to be programmed (Block 1027) to the subscriber unit using, e.g., DTMF codes. The subscriber unit then checks to see whether the telephone number that it has received is valid by checking its length and the legitimacy of the number (Block 1029). The legitimacy of the telephone number is checked based on known constraints, e.g., telephone numbers generally cannot begin with zero. When a number with an improper length, or an illegitimate number is received a counter is incremented and checked to see whether four illegitimate numbers or numbers of improper length have been received. If more than four illegitimate numbers have been received, the cellular programming center operator will come onto the line and issue further instructions (Block 1019). If fewer than four illegitimate numbers have been received, the subscriber unit will request that the cellular programming center resend the first telephone number to be programmed (Block 1033). In response to the resend request, the cellular programming center resends the first telephone number (Block 1027) and the telephone number is rechecked (Block 1029). Once a legitimate and proper length number has been sent, the subscriber unit will send the telephone number back to the cellular programming center using, e.g., DTMF codes for error checking purposes (Block 1035), i.e., the telephone number received at the cellular programming center is compared with the telephone number sent by the cellular programming center, and the telephone number is programmed into the memory of the subscnber unit (Block 1037). Note that, in another embodiment, the subscriber unit may wait until the cellular programming center has checked the telephone number for errors before the telephone number is programmed into the memory.

Referring again to the embodiment of Figure 5B., the cellular programming center will check the telephone number it received back from the subscriber unit for errors and if it detects an error (Block 1039), a counter will be incremented and checked to see whether more than four erroneous telephone have been received back at the cellular programming center. In the event that more than four erroneous numbers have been received back at the cellular programming center (Block 1041), the cellular programming center operator will come on the line and issue further instructions to the user (Block 1019). If fewer than four numbers have been received back at the cellular programming center (Block 1041), the cellular programming center will resend the telephone number (Block 1027). The subscriber unit error checking (Block 1029) and the resend back to the cellular programming center (Block 1035) will be repeated and the cellular programming center error check will again occur (Block 1039).

If there is only one new telephone number to be programmed (Block 1043) then the cellular programming center will acknowledge the successful programming of the subscriber unit (Block 1045) and the subscriber unit will turn off program mode (Block 1047) and switch into normal operation mode (Block 1049). After switching into normal operation mode, the cellular programming center operator will come onto the line (Block 1019) and ask the user of the subscriber unit whether any further services are needed.

In the event that more than one new telephone number is to be programmed (Block 1043), the cellular programming center will send the second number to be programmed (Block 1051). As above, the subscriber unit will check the legitimacy of the telephone number (Block 1053) and will request a resend of the new telephone number up to four times before the cellular programming center operator comes on the line (Blocks 1055, 1057, 1019). When a legitimate telephone number is received (Block 1053), the subscriber unit will send the telephone number back to the cellular programming center for checking (Block 1059) and program the new telephone number into its memory (Block 1061). The cellular programming center will check the resent telephone number (Block 1063), and will resend the second new telephone number up to four times (Blocks 1065, 1051, 1053, 1059, 1061), as above. When the cellular programming center determines that the second telephone number has been properly programmed, (Block 1063), the cellular programming center will acknowledge the successfull programming (Block 1045), the subscriber unit will turn off programming mode (Block 1047) and the subscriber unit will switch into normal mode (Block 1049). Finally, the cellular programming center operator will come on the line (Block 1019), and ask the user whether any further services are required.

In this way, an emergency cellular telephone may be programmed with telephone numbers that are associated with designated calling buttons in a remote-controlled, over-the-air method such that the user of the subscriber unit is not required to be physically present at the cellular programming center in order to have his/her emergency cellular telephone reprogrammed.

The present approach provides a flexible cellular telephone system that is available for safety and emergency uses at modest cost, and is available for personal calling at greater cost. Thus, the person who wishes cellular telephone access as insurance in the event of an emergency or safety problem can have that access at reduced cost as compared with conventional cellular systems, through selection of particular features and structure of the system.

As an alternative to, or in addition to, programming or reprogramming telephone numbers associated with dedicated calling buttons, the above-described method can also be used to program the mobile identification number, the station identification number, the first primary paging channel, the first secondary paging channel, the access overload class, etc. As a result, the method of the present invention advantageously provides for remote-controlled activation of the subscriber unit. Such remote-controlled activation can also be used to activate a conventional (full keypad) cellular telephone.

In practice, the subscriber unit is delivered with one of its dedicated calling number preprogrammed to call the cellular programming center (CPC). The user of the subscriber unit is instructed, e.g., in documentation that accompanies the subscriber unit, to press the preprogrammed dedicated calling button so as to dial the telephone number for the cellular programming center and, as a result, connect with the cellular programming center. Alternatively, in the case of a conventional cellular telephone having a full keypad, a telephone number for the cellular programming center is dialed by pressing appropriate keys on the full keypad, and a connection is made with the cellular programming center. Even though the subscriber unit is not yet activated upon delivery, an unrestricted telephone number is utilized to call the cellular programming center, such that no activation is required before placing an initial call to the cellular programming center.

Once connected with the cellular programming center, the user is asked, e.g., via a voice prompt, to select a cellular service provider. As an alternative, the subscriber unit may be preprogrammed with two or more unrestricted telephone numbers, each one corresponding to each of two or more cellular service providers. By selecting the dedicated calling button that corresponds to the unrestricted telephone number of a desired cellular service provider, the subscriber unit is connected directly with the cellular service provider, instead of connecting through the cellular programming center.

In the event the cellular programming center is utilized, once the cellular service provider is selected the cellular programming center provides to the user the telephone number that is associated with the subscriber unit after the subscriber unit is activated, e.g., via a computerized voice. Next, the mobile identification number, station identification number, first primary paging channel, first secondary paging channel, access overload class, etc. are programmed into the memory and error checking is performed in the same manner as is used to program and error check the telephone numbers associated with the dedicated calling buttons (described above). During the time that the mobile identification number, station identification number, etc. are being programmed, the user is instructed to wait. Unlike with the telephone numbers associated with the dedicated calling buttons, the user is not asked to provide any of the parameters (i.e., the mobile identification number, station identification number, etc.) needed for activation of the subscriber unit. DTMF codes are utilized, as above, to perform such programming. Financial responsibility can be established by requiring the user to enter a credit card number via the full keypad (when a full keypad is utilized), to give their credit card number to a live operator, or to record their credit card number to a memory device such as a magnetic tape, or an integrated circuit memory device. When the activation of the subscriber unit is complete, the cellular programming center informs the user that the subscriber unit is now fully activated for use within the cellular service provider's network.

In this way, the subscriber unit can be activated over the air (remotely), without the need for trained personnel, and without the need for the subscriber unit to be physically present at the cellular programming center.

Although particular embodiments of the invention have been described in detail for purposes of illustration, various modifications may be made without departing from the spirit and scope of the invention. One example of how the particular embodiments disclosed herein could be modified by one skilled in the art is for use in programming a mobile communications parameter that controls various other features of a cellular telephone. For example, the embodiments disclosed herein could easily be modified for use in programming a mobile communications parameter for calibration adjustments within the cellular telephone; for user preferences, such as backlighting and volume; for second, third and/or fourth cellular carrier (NAM) activations; and for mobile unit software updates. Thus, as used herein the term mobile communications parameter refers to any one or more of the above features or the like that can be programmed into a cellular telephone.

In addition, the embodiment could be modified to a provide phone unlock service for use in the event the operator of the subscriber unit forgets his or her lock code. Note that a subscriber unit (assuming it is a conventional (full keypad) cellular telephone) can still answer calls when it has been locked. In order to provide such phone unlock service, the above must be modified so that the cellular programming center initiates a cellular telephone call to the mobile unit, instead of vis versa.

The embodiment could be modified so that reprogramming can be done without a live operator at the cellular programming center. A computer can guide the user through menus to key in his preferences at the appropriate audio cues. This would be particularly useful in the case of telephones with full keypads that would, for example, permit entering the desired new telephone number directly.

The invention may also be applied to radio telephony systems other than cellular telephony systems, for example, dispatch and two way FM radio systems, pager systems and personal communication systems.

Another way in which a cellular programming center initiated cellular telephone call type modification to the above embodiments can be utilized is for reading error diagnostic codes from memory registers within a mobile unit.

Accordingly, the invention is not to be limited to the embodiments described above but only by the appended claims.

## Claims

1. A method of over-the-air remote-controlled programming of a dedicated calling number that is associated with one of a plurality of dedicated calling buttons (24, 26, 28) of a subscriber unit (22) in a cellular telephone system:
(a) initiating (1003) an outgoing cellular communication to a cellular programming center through the cellular telephone system by activating at least one of the plurality of dedicating calling buttons (24, 26, 28) of the subscriber unit (22);
(b) initiating (1009) a programming mode from the subscriber unit (22) by activating at least one of the plurality of dedicated calling buttons (24, 26, 28);
(c) transmitting (1013) a program-initiation signal from the subscriber unit (22) to the cellular programming center in response to the initiating step (b);
(d) receiving (1023) from the cellular programming center, a program-mode signal in response to the transmitting step (c);
(e) receiving (1027) from the cellular programming center a first dedicated calling number to be programmed; and
(f) programming (1037) the first dedicated calling number into a memory (66) within the subscriber unit (22), and associating the first dedicated calling number with one of the dedicated calling buttons;
whereby the subscriber unit (22) is programmed with the first dedicated calling number.

2. The method of over-the-air remote-controlled programming of Claim 1 wherein:
step (d) includes transmitting (1025) from the subscriber unit (22) an acknowledge signal that indicates to the cellular programming center that the subscriber unit (22) is in the programming mode.

3. The method of over-the-air remote-controlled programming of Claim 1 wherein:
step (e) includes transmitting (1035) the dedicated calling number to the cellular programming center, and verifying at the cellular programming center that the dedicated calling number does not contain an error.

4. The method of over-the-air remote-controlled programming of Claim 1 wherein:
step (e) includes receiving (1027) from the cellular programming center the first dedicated calling number, wherein the first dedicated calling number is received as a series of DTMF tones.

5. The method of over-the-air remote-controlled programming of Claim 1 wherein:
step (d) includes receiving (1023) from the cellular programming center, the program-mode signal wherein the program-mode signal is a sequence of one or more DTMF tones.

6. The method of over-the-air remote-controlled activation of Claim 1 wherein:
step (c) includes transmitting (1025) from the subscriber unit (22) an acknowledge signal that indicates to the cellular programming center that the subscriber unit (22) is in the programming mode.

7. The method of over-the-air remote-controlled programming of Claim 1 wherein:
step (d) includes transmitting (1035) the mobile identification number and the system identification number to the cellular programming center, and verifying at the cellular programming center that the mobile identification number and the system identification number do not contain an error.

8. A method of over-the-air remote-controlled programming of a subscriber unit (22) in a cellular telephone system, said method including:
(a) initiating (1003) an outgoing cellular communication to a cellular programming center through the cellular telephone system using an unrestricted telephone number;
(b) transmitting (1013) a program-initiation signal from the subscriber unit to the cellular programming center in response to the initiating step (a);
(c) receiving (1023) from the cellular programming center, a program-mode signal in response to the transmitting step (b);
(d) receiving (1027) from the cellular programming center the mobile communications parameter; and
(e) programming (1037) the mobile communications parameter into a memory within the subscriber unit (22);
whereby the subscriber unit (22) is programmed.

9. The method of over-the-air remote-controlled programming of Claim 8, wherein:
step (d) includes receiving (1027) from the cellular programming center the mobile communications parameter, wherein the mobile communications parameter is received as a series of DTMF tones.

10. A cellular telephone system operable in conjunction with a cellular mobile telephone switching office (30), the system including a subscriber unit (22) comprising:
a cellular transceiver (60) capable of remote operation in conjunction with the mobile telephone switching office (30);
a microphone (70) connected to the cellular transceiver (60);
a speaker (72) connected to the cellular transceiver (60);
an antenna (62) through which the transceiver (60) transmits signals to, and receives signals from, the mobile telephone switching office (30);
a memory (66) that stores a mobile identification number and a system identification number for the cellular transceiver,
programming means for programming the mobile identification number and the system identification number that are stored in the memory (66), wherein the programming means includes:
initiating means (24, 26, 28) for initiating a programming mode between the subscriber unit (22) and a cellular programming center, and
sending/receiving means (60) for transmitting from the cellular programming center to the subscriber unit (22) the mobile identification number and the station identification number to be programmed for the cellular transceiver (60); and
means for providing (78) the mobile identification number and the system identification number to the cellular transceiver (60) to activate the cellular transceiver (60).
